# EUROPÄISCHE PATENTSCHRIFT

(11) **EP 0 658 510 B1**
(45) Veröffentlichungstag und Bekanntmachung des Hinweises auf die Patenterteilung: **02.09.1998**
(21) Anmeldenummer: 94117893.1
(22) Anmeldetag: 12.11.1994
(51) Int. Cl.: B66F 9/075

(54) **Flurförderzeug**
Industrial truck
Chariot de manutention

(30) Priorität: 16.12.1993 DE 4342944
(43) Veröffentlichungstag der Anmeldung: 21.06.1995
(73) Patentinhaber: Jungheinrich Aktiengesellschaft, 22047 Hamburg (DE)
(72) Erfinder: Pawlik, Christian, Dr., D-24558 Henstedt Ulzburg (DE); Schalmath, Heinz, Ing. grad., D-24641 Stuvenborn (DE); Krenzin, Marcel, Dipl. Ing., D-22391 Hamburg (DE); Sodemann, Otto, D-23845 Itzstedt (DE)
(74) Vertreter: Patentanwälte Hauck, Graalfs, Wehnert, Döring, Siemons

(56) Entgegenhaltungen:
- EP-A- 0 329 946
- DE-A- 2 912 374
- DE-A- 3 705 635
- DE-B- 1 430 208
- FR-A- 1 136 172
- US-A- 2 156 580
- US-A- 2 563 370

## Beschreibung

Die Erfindung bezieht sich auf ein Flurförderzeug nach dem Oberbegriff des Patentanspruches 1.

Als Hubwagen sind Flurförderzeuge bekannt, die über fünf Räder abgestützt sind. Drei Räder befinden sich im Bereich des Antriebs, wobei zumeist das Antriebsrad zwischen zwei seitlichen Stützrädern angeordnet ist, während zwei weitere Räder der Lastachse zugeordnet sind. Zum Ausgleich von Bodenunebenheiten und zur Sicherung von Traktion und Abbremsung werden entweder die Stützräder oder das Antriebsrad vertikal beweglich ausgeführt und zumeist mittels einer Feder in Bodenkontakt gedrückt. Bei Fahrzeugen mit höheren Fahrgeschwindigkeiten (Mitfahrerfahrzeuge) wird in der Regel das Antriebsrad beweglich ausgeführt, während die Stützräder starr aufgehängt sind.

Aus der DE 39 04 798 oder EP 0 209 502 ist bekannt geworden, die Aufhängung des Antriebsrades über Lenkersysteme vorzunehmen. Nachteilig ist dabei, daß beim Ein- und Ausfedern eine Kreisbewegung stattfindet mit vertikaler und horizontaler Komponente. Dies führt in Abhängigkeit von der Fahrtrichtung zu unterschiedlichen Radaufstandskräften und damit unterschiedlichen Brems- und Beschleunigungseigenschaften.

Aus DE 31 06 027, EP 0 150 830 oder EP 0 329 946 ist auch bekannt geworden, den sog. Lenkschaft für das Antriebsrad über ein vertikales Gleitlager zu führen. Zur Minimierung der Lagerbelastung und Verbesserung des Ansprechverhaltens müssen die Lagerstellen möglichst weit voneinander entfernt angeordnet sein. Dies führt zu einem großen Einbauvolumen und unter Umständen zu Kollisionen mit anderen Bauelementen, wie Zylinder, Antriebe, Lenkung usw. Daher ist aus der DE 37 05 635 für fahrerlose Transportsysteme bekannt geworden, an den für die Drehung zur Lenkung des Antriebs- und Lenkrades vorgesehenen Außenring eines Drehkranzlagers an seinem Umfang gleichmäßig verteilt vier in einem Anschlußgehäuse zum Fahrzeug längsgeführte Zahnstangen anzuschließen, die mit zwei zueinander im Eingriff stehenden Doppelritzelwellen im Eingriff stehen.

Aus DE-A-14 30 208 ist bekanntgeworden, für eine Radaufhängung eine Führungsstange vorzusehen, die mit einer in einer Buchse angeordneten Kugelumlaufeinheit zusammenwirkt.

Aus der FR-A-ist bekannt, eine oder zwei Buchsen an vertikalen Führungsstangen beweglich zu lagern, u.a. auch mit einer Rollen- bzw. Kugelumlaufeinheit. An einer Buchse oder einem Verbindungssteg zwischen zwei Buchsen ist ein Konus für die Aufnahme eines Fahrzeugrades vorgesehen. Beide zuletzt beschriebenen Aufhängungen dienen für die Lagerung von Rädern von Kraftfahrzeugen.

Der Erfindung liegt die Aufgabe zugrunde, ein Flurförderzeug zu schaffen, bei dem die Aufhängung des Antriebsrades unabhängig von der Richtung des Antriebsrades annähernd gleiche Radaufstandskraft gewährleistet und zugleich eine kompakte Bauweise ermöglicht.

Bei der Erfindung wird eine Linearführung vorzugsweise als Rollen- bzw. Kugelumlaufeinheit oder als Walzkörperflachführung vorgesehen. Gegenüber bekannten Radaufhängungen mittels Lenker wird der Vorteil erhalten, daß die Radaufstandskräfte richtungsunabhängig sind. Gegenüber den vertikalen Gleitlagern wird der Vorteil erhalten, daß Wälzlager grundsätzlich ein besseres Ansprechverhalten aufweisen. Es treten keine Stick-Slip-Effekte auf. Die durch die Erfindung mögliche kompakte Bauweise und hohe Tragfähigkeit, insbesondere Umlaufeinheiten oder Flachführungen erlaubt die Anordnung der Antriebsaufhängung in Bereichen, welche vorher nicht nutzbar waren. So kann der Motor mit Bremse vorzugsweise auf der Aufnahmeeinheit angeordnet werden. Die Führung bzw. Lagerung ist bezüglich der Lenkachse für das Antriebsrad exzentrisch angeordnet, beispielsweise zwischen dem Antriebsrad und dem Rahmen des Fahrzeuges. Dieser Platz ist normalerweise für die Anbringung anderer Teile ungenutzt, weil er schwer zugänglich ist.

Nach einer Ausgestaltung der Erfindung besteht die Linearführung aus einer Führungsschiene und einem an der Führungsschiene entlangbewegten Führungswagen. Der Führungswagen kann an der Aufnahmeeinheit für das Antriebsrad angeordnet sein. Die Führungsschiene ist demgemäß am Rahmen befestigt. Eine sinngemäße umgekehrte Anordnung von Führungswagen und Führungsschienen am Antriebsrad bzw. am -rahmen ist ebenfalls möglich.

Die Führungsschiene kann mindestens zwei Führungsbahnen aufweisen und der Führungswagen ein komplementäres Führungsprofil. Die Führungsflächen können jeweils im rechten Winkel zueinander angeordnet sein, um eine gleichmäßige Verteilung von auftretenden Querkräften zu ermöglichen. Derartige Linearführungen sind an sich bekannt. Sie werden für stationäre Einsätze, wie z.B. in Werkzeugmaschinen, Handhabungsautomaten usw. verwendet.

Es ist auch denkbar, zwei Führungseinheiten zwischen Rahmen und Aufnahmeeinheit vorzusehen, die im Abstand voneinander angeordnet sind. Dadurch kann die Aufnahmeeinheit noch näher am Rahmen plaziert werden.

Die Erfindung wird nachfolgend anhand von Zeichnungen näher erläutert.
- Fig. 1: zeigt in Seitenansicht ein Flurförderfahrzeug nach der Erfindung.
- Fig. 2: zeigt die Ansicht des Fahrzeugs nach Fig. 1 in Richtung Pfeil 2 bei entfernter Verkleidung.
- Fig. 3: zeigt die Untersicht des Fahrzeuga nach Fig. 1.
- Fig. 4: zeigt in Draufsicht teilweise im Schnitt die Linearführung des Antriebsrades des Fahrzeugs nach Fig. 1 bis 3.

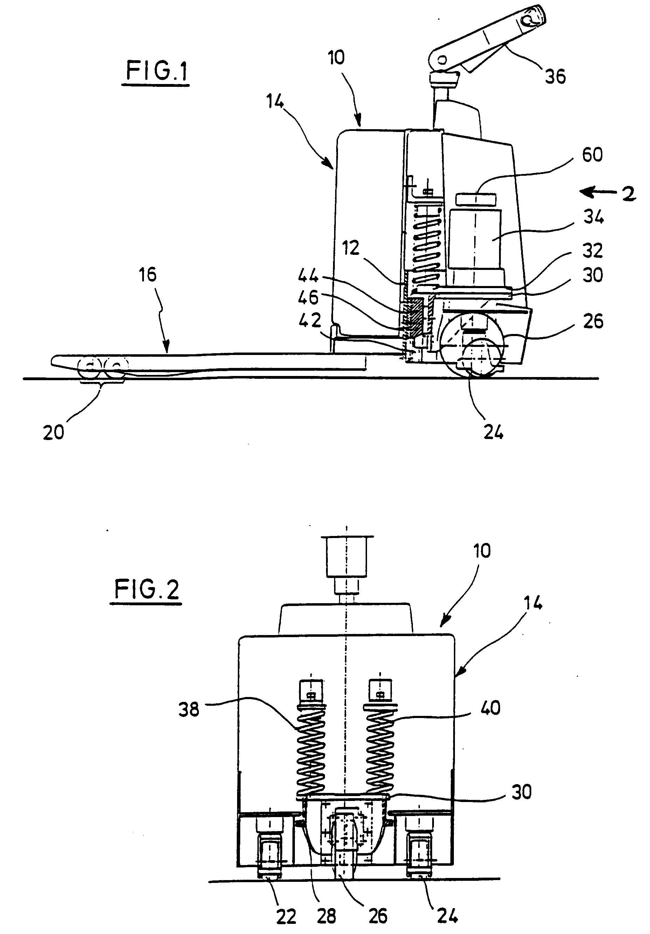

In den Fig. 1 bis 3 ist ein Flurförderzeug 10 in Form eines Hubwagens dargestellt mit einem Rahmen 12, auf dem ein Aufbau 14 angeordnet ist und an dem eine Gabelanordnung 16 für die Aufnahme einer Last höhenbeweglich ist. Da diese Teile allgemein bekannt sind, wird hierauf im einzelnen nicht eingegangen.

Die Gabelanordnung weist Lastrollenpaare auf, von denen eines in Fig. 1 bei 20 dargestellt ist. Im Bereich des Aufbaus ist zwischen zwei Stützrollen 22, 24 ein Antriebsrad 26 angeordnet. Die Stützrollen 22, 24 sind starr aufgehängt, jedoch um eine vertikale Achse schwenkbar.

Das Antriebsrad 26 ist um eine horizontale Achse drehbar von einer Aufnahmeeinheit 28 gehalten, die im einzelnen nicht beschrieben werden soll. Sie weist einen Flansch 30 auf, der mit einem Flansch 32 für einen Antriebsmotor 34 zusammenwirkt. Der Antriebsmotor 34 befindet sich somit unmittelbar über dem Antriebsrad 26. Ein Lenkschaft (nicht gezeigt) erstreckt sich durch den Motor 34 hindurch und ist mit der Aufnahmeeinheit 28 so verbunden, daß diese zusammen mit dem Antriebsrad 26 eine Schwenk- bzw. Lenkbewegung um eine vertikale Achse ausführen kann. Der Lenkschaft ist mit einer Lenkdeichsel 36 oberhalb des Aufbaus 14 gekoppelt.

Wie noch beschrieben wird, ist die Aufnahmeeinheit 28 vertikal geführt, wobei zwei an dem Flansch 30 angreifende Schraubenfedern 38, 40 die Radaufnahme 28 nach unten vorspannen, um das Antriebsrad 26 in ständigem Bodenkontakt zu halten.

Im Raum vor dem Antriebsrad 26 bzw. dem Motor 34 ist am Rahmen 12 ist eine Führungsschiene 42 angebracht, die mit einem Führungswagen 44 zusammenwirkt und eine lineare Führungseinheit bildet. Die Führungsschiene 42 ist an einer Tragplatte 46 montiert, die ihrerseits am Rahmen 12 befestigbar ist. Der Führungswagen 44 ist seitlich an der Aufnahmeeinheit 28 angebracht, die mit einer entsprechenden vertikalen Wand versehen ist. Die gesamte Führung nimmt daher nur wenig Platz ein, der zwischen der Aufnahmeeinheit 28 und dem zugeordneten Rahmenteil gebildet ist. Für die Anbringung aller anderen Teile ist oberhalb der Aufnahmeeinheit 28 ausreichend Raum zur Verfügung.

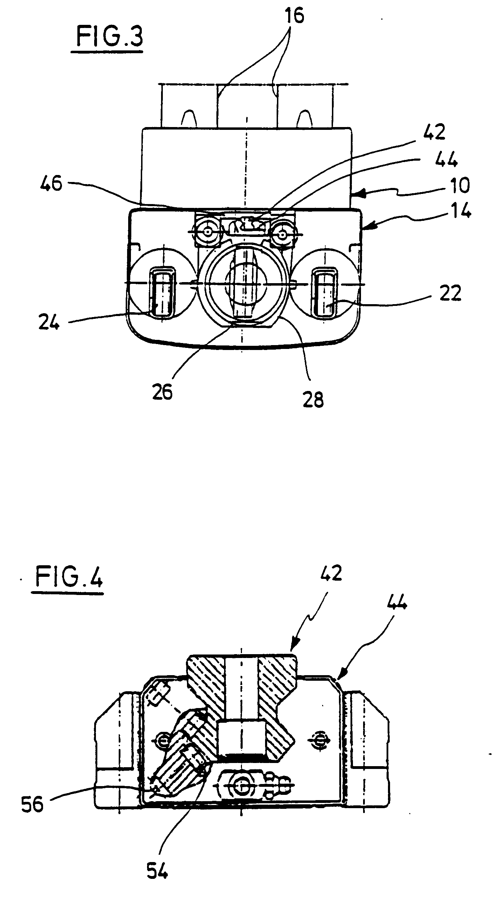

Die Linearführung geht deutlicher aus Fig. 4 hervor. Man erkennt, daß die Führungsschiene 42 vier annähernd im rechten Winkel zueinander stehende Führungsbahnen 50 aufweist, mit denen Umlaufwälzlager des Wagens 44 zusammenwirken, von denen zwei bei 52 bzw. 54 angedeutet sind. Die Rollen 56 sind in entsprechenden Umlaufkanälen geführt, von denen ein Strang jeweils einer Führungsbahn 50 zugeordnet ist. Auf diese Weise wird eine reibungsarme Führung des Führungswagens 44 an der Führungsschiene 42 erhalten sowie eine gleichmäßige Aufnahme von Querkräften. Dies ist insofern wichtig, als die Führung außermittig zur Achse 60 für die Lenkung des Antriebsrades 26 angeordnet ist.

## Patentansprüche

1. Flurförderzeug, bei dem zwischen seitlichen Stützrädern (22, 24) ein lenkbares, motorgetriebenes Antriebsrad (26) angeordnet ist, das unter Druck in Bodeneingriff gehalten ist und einer Linearführung (42, 44), mit der eine Aufnahmeeinheit (28) für das Antriebsrad (26) linear vertikal im Rahmen (12) des Fahrzeugs (10) geführt ist, dadurch gekennzeichnet, daß das Antriebsrad (26) durch Federmittel (38, 40) in Bodeneingriff gedrückt ist und daß mindestens eine außerhalb der Antriebslenkachse (60) liegende Linearführung (42, 44) als Rollen- bzw. Kugelumlaufeinheit oder als Wälzkörperflachführung vorgesehen ist.

2. Flurförderzeug nach Anspruch 1, dadurch gekennzeichnet, daß die Linearführung aus einer Führungsschiene (42) und einem an der Führungsschiene (42) entlang beweglichen Führungswagen (44) besteht.

3. Flurförderzeug nach Anspruch 1 oder 2, dadurch gekennzeichnet, daß die Linearführung in dem Raum zwischen der Aufnahmeeinheit(28) für das Antriebsrad (26) und dem Rahmen des Fahrzeugs (10) angeordnet ist.

4. Flurförderzeug nach Anspruch 2 oder 3, dadurch gekennzeichnet, daß die Führungsschiene (42) oder der Führungswagen (44) an der Aufnahmeeinheit (28) für das Antriebsrad (26) angebracht ist.

5. Flurförderzeug nach Anspruch 2 oder 3, dadurch gekennzeichnet, daß die Führungsschiene (42) oder der Führungswagen (44) auf einer am Fahrzeugrahmen (12) oder am Führungswagen (44) befestigbaren Tragplatte (46) angebracht ist.

6. Flurförderzeug nach einem der Ansprüche 1 bis 5, dadurch gekennzeichnet, daß zwei Schraubenfedern (38, 40) die Aufnahmeeinheit (28) vorspannen.

## Claims

1. An industrial truck with which between lateral supporting wheels (22, 24) there is arranged a steerable motor-driven drive wheel (26) which under pressure is kept in engagement with the floor and with a linear guide (42, 44) with which a receiving unit (38) for the drive wheel (26) is guided linearly vertically in the frame (12) of the vehicle (10), characterised in that the drive wheel (26) is pressed into engagement with the floor by spring means (38, 40) and that at least one linear guide lying outside the drive steering axle (60) is provided as a roller or ball circulating unit or as a roller body flat guide.

2. An industrial truck according to claim 1, characterised in that the linear guide consists of a guiding rail (42) and a guide carriage (44) movable along the guide rail (42).

3. An industrial truck according to claim 1 or 2, characterised in that the linear guide is arranged in the space between the receiving unit (28) for the drive wheel (26) and the frame of the vehicle (10).

4. An industrial truck according to claim 2 or 3, characterised in that the guide rail (42) or the guide carriage (44) is mounted on the receiving unit (28) for the drive wheel (26).

5. An industrial truck according to claim 2 or 3, characterised in that the guide rail (42) or the guide carriage (44) is mounted on a carrier plate (46) which can be fastened to the vehicle flame (12) or on the guide carriage (44).

6. An industrial truck according to one of claims 1 to 5, characterised in that two helical springs (38, 40) pretension the receiving unit (28).

## Revendications

1. Chariot de manutention au sol, pour lequel, entre des roues latérales porteuses (22, 24), est disposée une roue d'entraînement (26) orientable et entraînée par moteur, qui est maintenue par pression en contact avec le sol et un guidage linéaire (42, 44), avec lequel une unité de montage (28) pour la roue d'entraînement (26) est guidée linéairement verticalement dans le châssis (12) du véhicule (10),
caractérisé en ce qu'une pression est exercée sur la roue d'entraînement (26) par des moyens de ressorts (36, 40) pour son contact avec le sol, et en ce qu'au moins un guidage linéaire (42, 44), placé en dehors de l'axe de direction (60) de l'entraînement, est prévu sous la forme d'une unité à recirculation à rouleaux ou à billes, ou sous la forme d'un guidage à plat de corps roulants.

2. Chariot de manutention au sol suivant la revendication 1, caractérisé en ce que le guidage linéaire est constitué d'un rail de guidage (42) et d'un chariot de guidage (44) mobile le long du rail de guidage (42).

3. Chariot de manutention au sol suivant la revendication 1 ou la revendication 2, caractérisé en ce que le guidage linéaire est disposé dans l'espace compris entre l'unité (28) recevant la roue d'entraînement (26) et le bâti du véhicule (10).

4. Chariot de manutention au sol suivant la revendication 2 ou la revendication 3, caractérisé en ce que le rail de guidage (42) ou le chariot de guidage (44) sont rapportés sur l'unité de montage (28) de la roue d'entraînement (26).

5. Chariot de manutention au sol suivant la revendication 2 ou la revendication 3, caractérisé en ce que le rail de guidage (42) ou le chariot de guidage (44) est monté sur une plaque-support (46) pouvant être fixée au châssis (12) du véhicule, ou au chariot de guidage (44).

6. Chariot de manutention au sol suivant l'une des revendication 1 à 5, caractérisé en ce que deux ressorts hélicoïdaux (38, 40) soumettent l'unité de montage (28) de la roue à une pré-contrainte.
